Europäisches Patentamt

(19) European Patent Office

Office européen des brevets

(11) Publication number: **0 181 196**
**A2**

# (12) EUROPEAN PATENT APPLICATION

(21) Application number: **85308045.5**

(22) Date of filing: **05.11.85**

(51) Int. Cl.⁴: **G 06 K 11/06**

(30) Priority: **06.11.84 US 668609**

(43) Date of publication of application:
**14.05.86 Bulletin 86/20**

(84) Designated Contracting States:
**DE FR GB IT**

(71) Applicant: **Kurtzig, Arie J.**
**24863 Olive Tree Lane**
**Los Altos Hills Califo   ia 94022(US)**

(72) Inventor: **Kurtzig, A    J.**
**24863 Olive Tree Lane**
**Los Altos Hills Cali        94022(US)**

(74) Representative: **Wright, Peter David John  et al,**
**R.G.C. Jenkins & Co. 12-15, Fetter Lane**
**London EC4A 1PL(GB)**

(54) Removable touchscreen.

(57) The present invention provides multi-purpose touchscreens and touchpads which may be utilized in the customary manner associated with such devices, but which are configured also for use in other non-traditional modes. According to one aspect of the invention, a touchscreen is configured for use attached to a display monitor, and also for use on a stand-alone basis (when removed from the monitor) as a touchpad. According to another aspect of the invention, a touchscreen or touchpad is configured to facilitate use of the device in conjunction with information presented on the pages of a printed book. Configurations are disclosed which provide alignment of the device with book pages and which provide special protections for various elements of the device to insure long life and reliable performance.

FIG. I

REMOVABLE TOUCHSCREEN

Background of the Invention

This invention relates generally to touch-sensitive devices for providing i put to digital computer systems, and more particularly to touchscreens and touchpads which are adapted for multi-purpose use, especially for use in conjunction with a printed book.

Touchscreen devices of many kinds are known in the prior art. These are commonly used to provide touch-sensitive input to digital computer systems. The touchscreen is placed over the display monitor so that locations on the touchscreen can be touched which are associated with information presented on the underlying display monitor. Typical prior art references describe touchscreens which either contain no mechanism for attachment to the display monitor, or which include a mechanism which more or less permanently affixes the touchscreen to the face of the display monitor. Typical devices of the former kind are illustrated in U.S. Patent 3,911,215 and U.S. Patent 4,220,815. In the present specification and claims, the term "touchscreen" will be used to mean those touch-sensitive devices of the type which are attachable to a display monitor.

Also known in the prior art are touchpad devices which also provide touch-sensitive input to digital computer systems. These devices, however, are not

-2-

associated with a display monitor, but are responsive to touch at random positions or at positions associated with the information on a "template" which is placed over the touchpad. Such a device is exemplified by the Koala Pad manufactured by Koala Technologies Corporation, in Santa Clara, California. Such touchpads are not usually associated with display monitors, as described above in connection with touchscreens; for example, most touchpads are not constructed from transparent materials, nor are they constructed to be attachable to a display monitor.

Finally, in U.S. Patent 4,071,689 there is described a transparent touch-sensitive device which may be placed adjacent to a display monitor, or alternatively adjacent to "hard copy" (col. 5, line 30) for use as a touch sensitive device in connection with either. However, there is no description in this reference of attaching the device to a display monitor in a detachable manner, or in any manner at all.

In none of the above mentioned references is there any description of a touchscreen or touchpad used in conjunction with the printed matter contained in a book, as opposed to a display monitor, or merely "hard copy." Such a device would offer numerous advantages over prior art devices, as will be described more fully below.

## Summary of the Invention

In accordance with the illustrated preferred embodiments, the present invention provides multi-purpose touchscreens and touchpads which may be utilized in the customary manner associated with such devices, but which are configured also for use in other non-traditional modes.

According to one aspect of the invention, a touchscreen is configured for use attached to a display monitor, and also for use on a stand-alone basis as a touchpad.

According to another aspect of the invention, a touchscreen or touchpad is configured to facilitate use of the device in conjunction with information presented on the pages of a printed book.

In accordance with another aspect of the invention, the active area of the touchscreen or touchpad is surrounded with a three-sided U-shaped frame which facilitiates insertion and alignment of the device into a printed book, enabling the user to interact with the printed and graphic information in the book by touching the touchscree; or touchpad appropriately.

In accordance with yet further aspects of the invention, conductive elements are deposited onto the touchpad or touchscreen in such manner as to insure long-life of the active area and the conductive elements.

Description of the Drawing

Figure 1 is a touch-sensitive device with attachment pads for quick attachment and detachment to a display monitor.

Figure 2 shows a touch-sensitive device interacting with a book.

Figure 3 shows a side view of a touch-sensitive device including alignment posts for use with a book.

Figures 4a through 4d show the construction of the bottom section of a touch-sensitive device.

Figure 5 shows the construction of the top section of a touch-sensitive device.

Description of the Preferred Embodiment

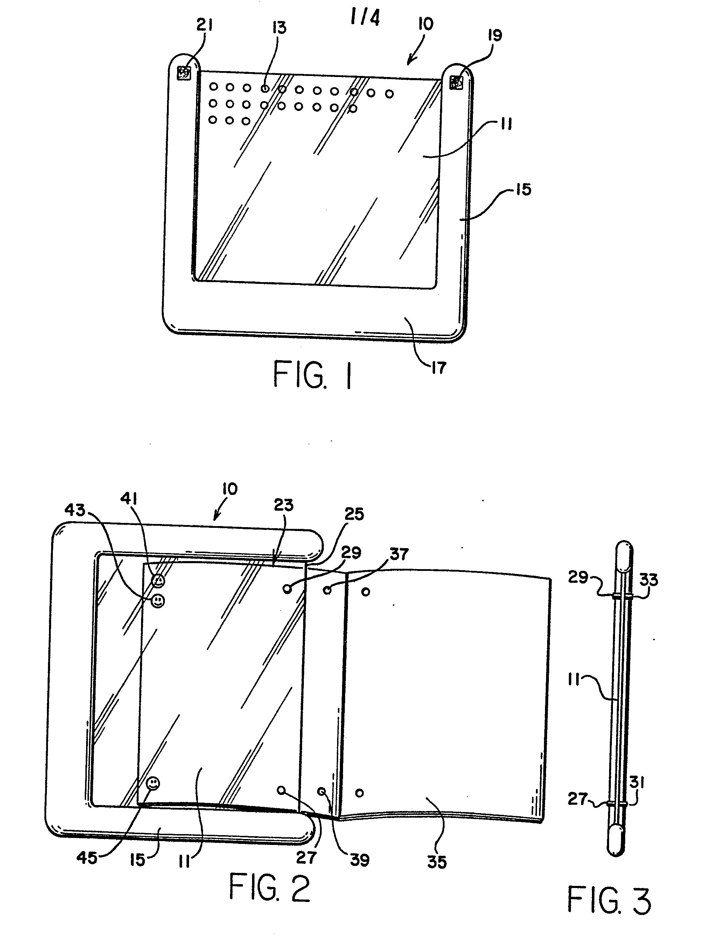

In Figure 1 there is shown a device 10 which can function as a touchscreen or a touchpad, as those terms are commonly known in the art. In the present specification and claims, the term "touchscreen" will be taken to mean a touch-sensitive device which is attachable to and used in conjunction with a display monitor. The term "touchpad" will mean a touch-sensitive device which is not attachable to a display monitor, but which is used on a stand-alone basis. More particularly, device 10 includes an active area 11 which may be a pair of transparent conducting plates, each of which includes a transparent substrate with a material such as Indium Tin Oxide (ITO) deposited thereon. The plates are separated from each other by rows of transparent insulating spacers 13 fabricated from plastic or epoxy so that contact between the plates only occurs at points subjected to pressure caused by the touch of a user. The contact point is detected by external circuitry well known to those skilled in the art; for example, a device of this general type is described in U.S. Patent Number 3,911,215 issued to Hurst and Colwell. Note that if the device is to be used only as a touchpad and not as a touchscreen, then the materials of active area 11 need not be transparent. Other types of touchscreens and touchpads are also know in the art, and could be employed in the present invention. Some examples are: an LED (light emitting diode) based device, such as the touchscreen on the Model 150 personal computer manufactured by the Hewlett-Packard Company; and a capacitive based device, such as the Model TK 1000 manufactured by Interaction Systems, Inc., of Newtonville, Massachusetts.

In this preferred embodiment, active area 11 is surrounded on three sides by a frame 15, which may be of molded plastic or other suitable material. In a preferred embodiment, a bottom portion 17 of frame 15 is hollow, so that external circuit elements may be contained therein.

-5-

In operation as a touchscreen, device 10 is placed over a display monitor, such as a television screen or a CRT monitor of the type associated with a digital computer system. The touchscreen is attached to the display monitor in a manner which facilitates easy attachment and easy removal. For example, in Figure 1 a pair of Velcro pads 19 and 21 are affixed to frame 15. These pads are preferably of the "loop" type so that they will not attach to the user's clothing when the touchscreen is being handled. A corresponding pair of Velcro pads, preferably of the "hook" type is affixed to the display monitor, so that when frame 15 is positioned over the display monitor, the Velcro pads on the monitor engage pads 19 and 21, thereby holding the touchscreen in place. When it is desired to use the device in a different mode apart from the display monitor (for example, as a stand-alone touchpad), pads 19 and 21 are simply and quickly disengaged from the corresponding pads on the display monitor. The device may now be used on a stand-alone basis as a touchpad, or in conjunction with other items such as templates or books.

Velcro pads 19 and 21 are the preferred form of attachment of the touchscreen because they can be quickly engaged and disengaged and they permit attachment to a wide variety of shapes and sizes. However, other forms of attachment may also be employed. For example, brackets may be affixed to the display monitor, and the touchscreen hung from the brackets, or alternatively, the touchscreen may be simply clamped to a post on the display monitor to provide the desired quick release. All of these quick-engagement and disengagement devices are distinct from prior art attachable touchscreens, which typically required that a front panel, or bezel of the display

-6-

monitor be removed and replaced to attach the touchscreen.

After the touchscreen is affixed to the monitor, alignment is achieved by the user touching a pair of points indicated by "markers" shown on the monitor. This position information is sent to the digital computer system which can then associate future touches, with the proper information displayed in the monitor.

A device such as that illustrated in Figure 1 provides yet an additional advantage over prior art touchscreens and touchpads. This feature is illustrated in Figure 2, which shows a printed book 23 such as a textbook. Touchscreen (or touchpad) 10 is positioned above and adjacent to an open page of book 23 so that printed information on the page can be viewed through the active area of the touchscreen.

Figure 2 shows that the U-shaped structure of frame 15 facilitates the use of the touchscreen with book 23. More particularly, to insure that active area 11 will lie flat on the open book, as well as to provide maximum overlap of the touchscreen with the open page, an edge 25 of active area 11 is not protected by frame 15, but is left exposed. It should be noted, however, that for aesthetic reasons, it may be desirable in some instances to extend frame 15 partially or even completely onto the fourth side, although it should generally be much thinner there to avoid interferring with use of the touchscreen when placed adjacent the page of a book.

Also illustrated in Figure 2 is a scheme for identifying page numbers. More particularly, a symbol 41 is shown in the upper left hand corner of the open page of book 23. In this case, the symbol is shown as a "happy face" which would be appropriate for subject matter directed toward children. However, it is not the contents of the symbol which is important, but rather only the location of the symbol on the page. Thus when a user touches symbol 41 through the touchpad, the location of that symbol is inputted to the digital computer, which interprets that location as a certain page number, say page 1. On other pages, the happy face symbol will appear at different locations such as those illustrated by symbols 43 and 45 which may represent e.g., pages 2 and 60 respectively. Thus, the user need only touch the symbol on any page prior to using that page to inform the digital computer of the relevant page number. This example illustrates that the user need have no knowledge of the page number himself, but need only remember to touch the symbol, which can even be responsive to a prompt from the system.

Alignment of active area 11 with the book page is important. To this end, the preferred embodiment of the invention utilizes small posts 27 and 29 extending perpendicularly to active area 11 near edge 25. These are inserted into corresponding holes 37 and 39 at the inner edge of the pages of book 23. As shown in more detail in Figure 3, posts 27 and 29 extend downwardly from active area 11 a sufficient height to insure that the device will not move when the posts are inserted into holes 37 and 39; a height of about 0.1" is appropriate. Additional posts 31 and 33 are shown extending from the opposite side of active area 11 which enable the device to be used in a mode of operation in which the book page is positioned on top of the touch-sensitive device, so that the user applies pressure to the device through the book page (or pages). Note that if only this mode of operation is desired, it is not necessary that active area 11 be transparent.

Another way in which the touch-sensitive device can be aligned with the book is by having the user touch two points on active area 11 associated with two corresponding alignment markers on the open book page. This alignment method may be used in lieu of the post configuration described above, or alternatively can be used in conjunction with the post configuration to insure good alignment. If page numbers are identified by symbols such as the happy faces described, then these symbols can also serve as some or all of the alignment markers.

By associating the touchscreen or touchpad with a book in the above-described manner, a user can touch the touchscreen at positions associated with the information printed on the open page of book 23. This makes it possible for the user to quickly and directly input information into a computer system based on the user's response to the printed or graphic material in the book. The uses of such a system are manifold; for example, the book may contain tutorial course materials associated with other materials presented on the display of a computer system using software associated with the book. The touchscreen of the present invention thereby makes possible the smooth integration of the book materials and the software materials via the user interaction with the touchscreen. This integrates the best features of the book, i.e., high quality text and graphics with the capability of a computer to interact with the user.

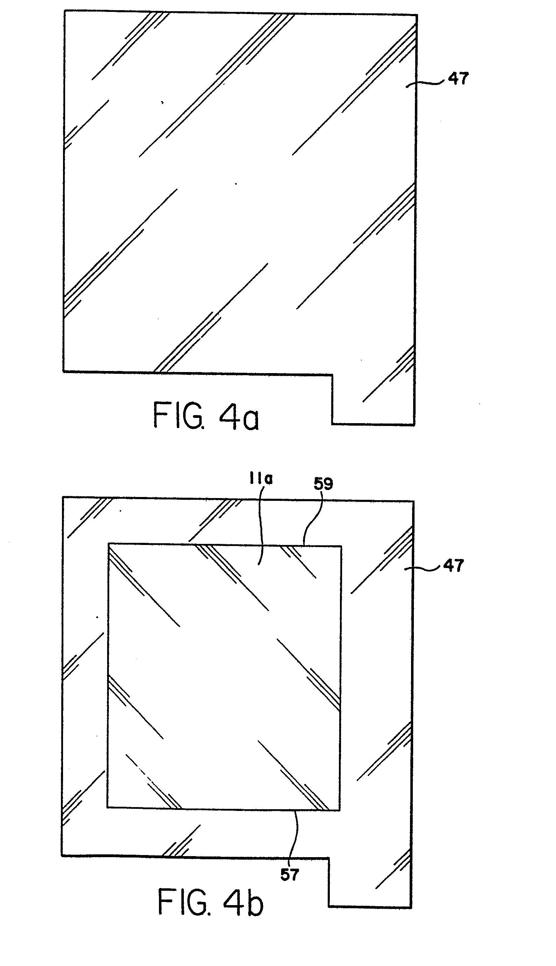

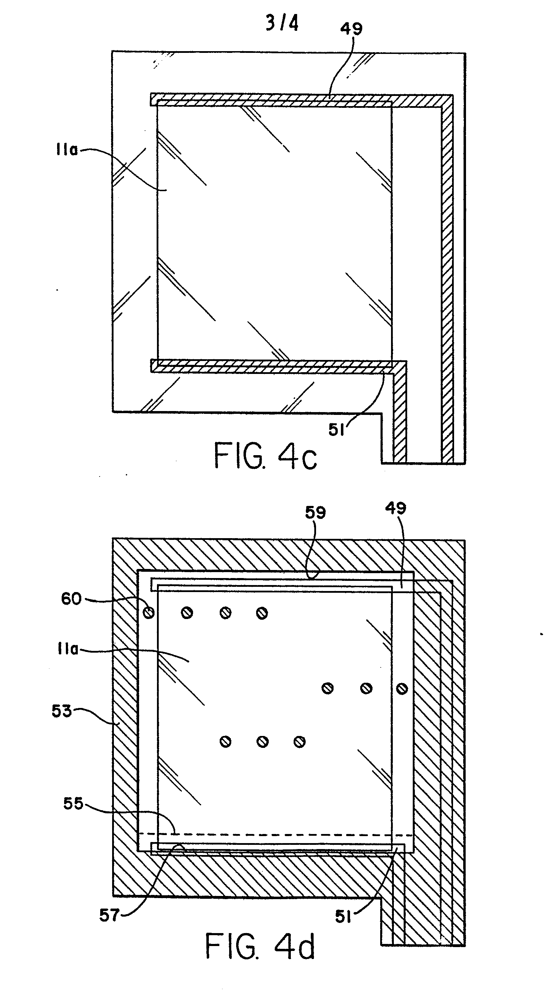

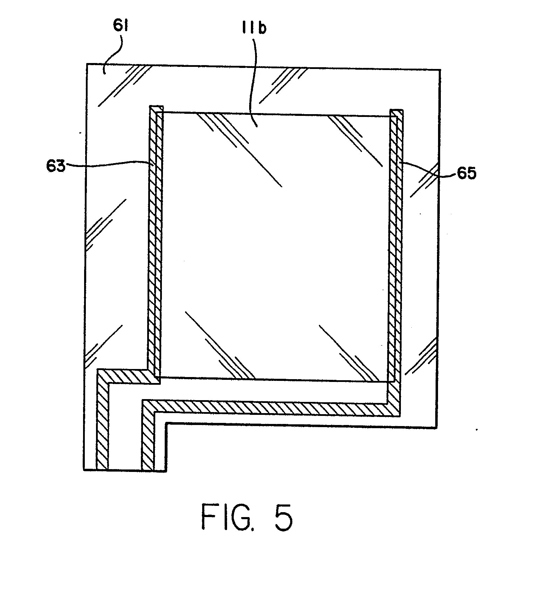

Illustrative of the many uses of this system which are not otherwise possible in the prior art is the ability of the user to identify and point to details in photographs, x-rays and other visual presentations which are easily printed in a book, but not easily reproducible on a computer display terminal. In Figures 4a through 4d and Figure 5 are shown a pair of components (bottom and top components respectively) which include transparent conducting materials making up active area 11 and other supporting features of a preferred embodiment of the present device. Figures 4a through 4c show the bottom component in more detail. In Figure 4a, there is shown transparent substrate element 47, e.g., of polyester. Figure 4b shows a film of transparent conducting material 11a, such as the ITO deposited on substrate 47 as described above having top and bottom edges 57 and 59.

A conducting element 49 of a material, such as silver, overlaps and electrically connects to the top edge of conducting film 11a. A second conducting element 51 overlaps and electrically connects to the bottom edge of conducting film 11a. Conducting elements 49 and 51 serve as the "y-axis" connections to conducting film 11a.

In Figure 4d there is shown a spacer element 53 of a non-conducting material such as a non-conducting epoxy, which serves to space conducting film 11a and conductors 49 and 51 away from corresponding elements on a top component (Figure 5). In the prior art, it was common for an edge of the spacer to overlap conducting film 11a as shown by dotted line 55. However, in use, when subjected to user pressure, conducting film 11a tended to form minute cracks under edge 55 causing unreliable performance.

In the preferred embodiments of the present invention, this problem is eliminated by proper positioning of the spacer edge. For example, the bottom edge 57 is located in a region above conductor 51, rather than on the transparent conducting film (as was edge 55 in the prior art). Any minute cracks which might appear under edge 57 are therefore electrically nullified by conduction of current through conductor 51 in the cracked regions.

-10-

An alternate positioning of spacer 53 which also alleviates the cracking problem is illustrated (again in Figure 4d), by the upper edge 59, which is located back from conductor 49. Thus, if cracking should occur at edge 59, it will not affect operation of the device, since the active area of film 11a is only the area between conductors 49 and 51.

Finally, Figure 4d also shows a few exemplary "spacer dots" 60. A grid of spacer dots of like material and thickness is overlayed onto conducting film 11a and substrate 47 along with the overlaying of spacer 53.

Figure 5 shows the construction of the top component of the device including a conducting film 11b on a substrate 61. In a manner similar to that described above with regard to the bottom component, a pair of conducting elements 63 and 65 serve as the x-axis connections to conducting film 11b. When the top component of Figure 5 is inverted and attached to the bottom component of Figure 4d, spacer 53 and spacer dots 60 electrically isolate conducting film 11a and 11b, except where these films are brought together by the pressure of user touch.

Although in general, either the x or y conducting elements could be affixed to either the top or bottom components of the device. In the preferred embodiment, it is desirable to position the elements as shown in Figures 4a through 4d and Figure 5, so that x-conducting elements 63 and 65 on the top component are not placed along edge 25 of Figure 2. This prevents damage to the conducting elements since that edge is not protected by frame 15 of Figure 2.

Although Velcro has been referred to, other textile-like materials which can be attached to each other by interengagement of their surface features, and detached again, could be employed.

-11-

CLAIMS

1. A touchscreen for a display monitor comprising:

an active area; and

attachment means for removably attaching the touchscreen to the display monitor, so that the touchscreen may also be used as a touchpad without regard to the display monitor.

2. A touchscreen as in claim 1 wherein the attachment means comprises a first Velcro pad attached to the display monitor and a second Velcro pad attached to a portion of the touchscreen.

3. A touchscreen as in claim 1 wherein said touchscreen is also configured to facilitate insertion thereof adjacent a page of an open book, so that a user can interact with printed information on the page by touching the active area at locations associated with the printed information on the page.

4. A touchscreen as in claim 3 wherein the active area is rectangular and is bounded on three sides by a frame, but is unbounded on the fourth side to facilitate insertion thereof over or under a page of an open book.

5. A touchscreen as in claim 3 further comprising alignment means for aligning the touchscreen with the page of the book.

6. A touchscreen as in claim 5 wherein the alignment means comprises a pair of posts extending from the touchscreen, for insertion into a pair of corresponding holes in the pages of the book.

7. A touchscreen as in claim 1, further comprising:

a pair of conducting elements in electrical contact with the active area; and

-12-

a spacer element on a portion of the active area, the edges of said spacer element being positioned not in the region between said conducting elements.

8. An information transfer system comprising:

a touchscreen for use with a display monitor comprising:

an active area;

attachment means for removably attaching the touchscreen to the display monitor, so that the touchscreen may also be used as a touchpad without regard to the display monitor;

said touchscreen also configured to facilitate insertion thereof adjacent a page of an open book, so that a user can interact with printed information on the page by touching the active area at locations associated with the printed information on the page; and

alignment means for aligning the touchscreen with the page of the book; and

a book containing pages having information thereon, the book including mating alignment means for interacting with the alignment means of the touchscreen to align the touchscreen with a page of the book when the touchscreen is placed adjacent that page.

9. An information transfer system as in claim 8 further comprising identifying means for identifying the page number of the page adjacent the touchscreen.

10. An information transfer system as in claim 9 wherein the identifying means includes a symbol on the page whose location is indicative of the page number of that page, so that the user can touch the touchscreen at a position associated with the position of the symbol.

11. A touchpad comprising:

an active area; and

-13-

insertion means for facilitating insertion of the touchpad adjacent a page of an open book, so that a user can interact with printed information on the page by touching the active area at locations associated with the printed information.

12. A touchpad as in claim 11 wherein the active area is rectangular and is bounded on three sides by a frame, but is unbounded on the fourth side to facilitate insertion thereof into the binding of an open book.

13. A touchpad as in claim 11 further comprising alignment means for aligning the touchpad with the page of the book.

14. A touchpad as in claim 13 wherein the alignment means comprises a pair of posts extending from the touchpad, for insertion into a pair of correspondng holes in the pages of the book.

15. An information transfer system comprising:

a touchpad comprising:

an active area;

insertion means for facilitating insertion of the touchpad adjacent a page of an open book, so that a user can interact with printed information on the page by touching the active area at locations associated with the printed information; and

alignment means for aligning the touchpad with the page of the book;

and

a book containing pages having information thereon, the book including mating alignment means for interacting with the alignment means of the touchpad to align the touchpad with a page of the book when the touchpad is placed adjacent that page.

-14-

16. An information transfer system as in claim 15 further comprising identifying means for identifying the page number of the page adjacent the touchpad.

17. An information transfer system as in claim 16 wherein the identifying means includes a symbol on the page whose location is indicative of the page number of that page, so that the user can touch the touchpad at a position associated with the position of the symbol.

18. A method of using a touch-sensitive device to input data to a digital computer system in conjunction with information contained on the pages of a book, comprising the steps of:

placing the device adjacent a page of the book; and

touching the device in a location associated with information on the book page to generate input data for the digital computer system.

19. A method as in claim 18 further comprising the step of touching the device in a position associated with information on the book page identifying the page number of the book page, so that data reflecting the page number will be input to the digital computer system.

20. A method as in claim 19 wherein the information identifying the page number comprises the location on the book page of a symbol.

21. A method as in claim 20 wherein the symbol is a non-numeric symbol.

1/4

**FIG. 1**

**FIG. 2**

**FIG. 3**

47

FIG. 4a

11a    59

47

57

FIG. 4b

49

11a

51

## FIG. 4c

59    49

60

11a

53

55

57    51

## FIG. 4d

FIG. 5